# EUROPÄISCHE PATENTSCHRIFT

(11) **EP 0 362 327 B1**
(45) Veröffentlichungstag und Bekanntmachung des Hinweises auf die Patenterteilung: **19.01.1994**
(21) Anmeldenummer: 89903078.7
(22) Anmeldetag: 22.03.1989
(51) Int. Cl.: F16C 23/00

(54) **AXIALLAGERUNG MIT EINER SCHIEFSTELLUNGSKOMPENSATION**
THRUST BEARING WITH SKEW COMPENSATION
PALIER DE BUTEE AVEC COMPENSATION D'INCLINAISON

(30) Priorität: 25.03.1988 CH 1147/88
(43) Veröffentlichungstag der Anmeldung: 11.04.1990
(73) Patentinhaber: ASEA BROWN BOVERI AG, 5400 Baden (CH)
(72) Erfinder: BÄTTIG, Josef, CH-5504 Othmarsingen (CH)
(74) Vertreter: Klein, Ernest
(86) Internationale Anmeldenummer: CH8900058
(87) Internationale Veröffentlichungsnummer: WO8909345

(56) Entgegenhaltungen:
- FR-A- 2 046 118
- FR-A- 2 279 141
- US-A- 2 777 739
- US-A- 3 049 860
- US-A- 3 131 003

## Beschreibung

### TECHNISCHES GEBIET

Bei der Erfindung wird ausgegangen von einer Axiallagerung mit einer Schiefstellungskompensation nach dem Oberbegriff des Patentanspruchs 1.

### STAND DER TECHNIK

Mit dem Oberbegriff des Patentanspruchs 1 nimmt die Erfindung auf einen Stand der Technik Bezug, wie er aus der US-A-3,131,003 bekannt ist. Dort wird ein Axiallager mit einer Schiefstellungskompensation beschrieben, das am Aussenumfang an zwei gegenüberliegende Befestigungsansätze eines mit Aussparungen bzw. Schlitzen versehenen Zylinders angeschraubt werden kann, welcher an einem Gehäuse befestigt ist. Die Befestigungsansätze sind durch Längsschlitze und zwei keulenförmig ausgebuchtete Aussparungen in Umfangsrichtung, die zwischen sich einen Steg lassen, begrenzt und über diesen Steg mit dem Zentralteil des Zylinders verbunden. Um 90° dazu versetzt sind je zwei weitere gleichartige Umfangsaussparungen mit Zwischenstegen vorgesehen, von denen jeweils eine Aussparung über einen Längsschlitz mit einem gehäusenahen Schlitz in Umfangsrichtung des Zylinders in Verbindung steht.

Die Auslenkung der Stege ist durch Anschläge begrenzt.

### DARSTELLUNG DER ERFINDUNG

Die Erfindung, wie sie im Patentanspruch 1 definiert ist, löst die Aufgabe, eine Axiallagerung mit einer Schiefstellungskompensation der eingangs genannten Art derart weiterzuentwickeln, dass die Lagerung sowohl genügend elastisch ist, um die zulässigen Deformationen zu ermöglichen, als auch verschleissfrei, um zu grosse Deformationen zu verhindern.

### KURZE BESCHREIBUNG DER ZEICHNUNGEN

Die Erfindung wird nachstehend anhand von Ausführungsbeispielen erläutert. Es zeigen:
- Fig. 1: axonometrisch eine Axiallagerung mit Befestigungsflansch und mittlerem sowie äusserem Gehäuseteil,
- Fig. 2 und 3: zwei Ansichten der Axiallagerung gemäss Fig. 1 in zwei zueinander senkrechten Projektionsrichtungen,
- Fig. 4: einen Axialschnitt gemäss der in der oberen Hälfte von Fig. 3 eingetragenen Schnittebene IV-IV,
- Fig. 5 und 6: einen Axialschnitt bzw. eine Seitenansicht einer Ausführungsform, die von der Erfindung nicht erfaßt ist, und
- Fig. 7 und 8: zwei Querschnitte durch diese Ausführungsform gemäss den in Fig. 5 eingetragenen Schnittverläufen VII-VII bzw. VIII-VIII.

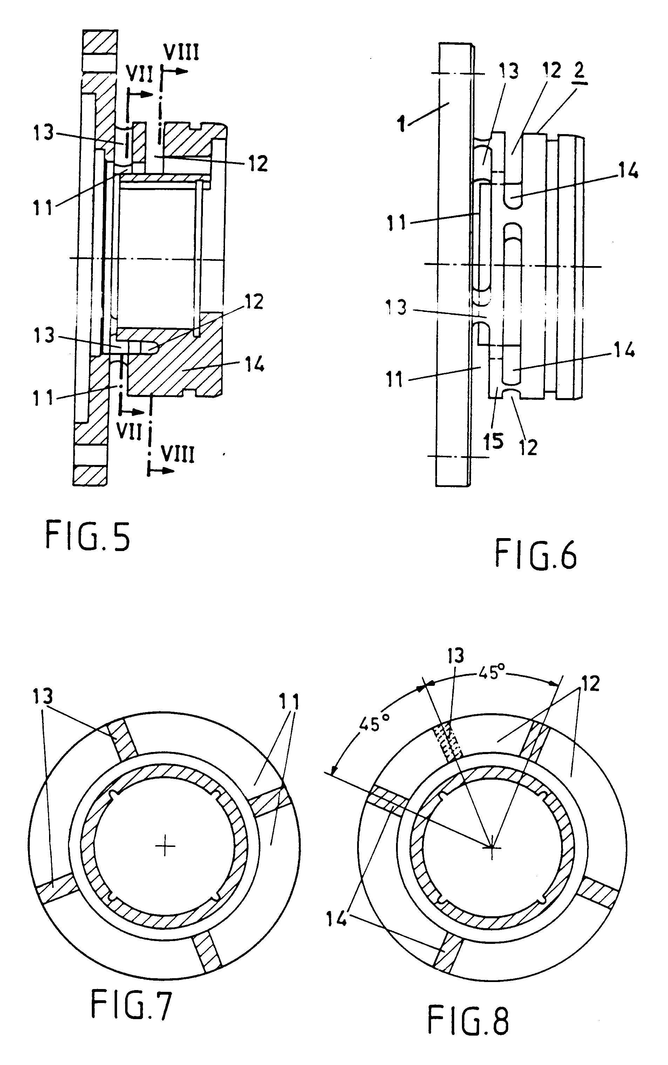

Die Ausgestaltung gemäß den Fig. 5 - 8 ist somit vom Schutzumfang nicht erfaßt.

### Weg zur Ausführung der Erfindung

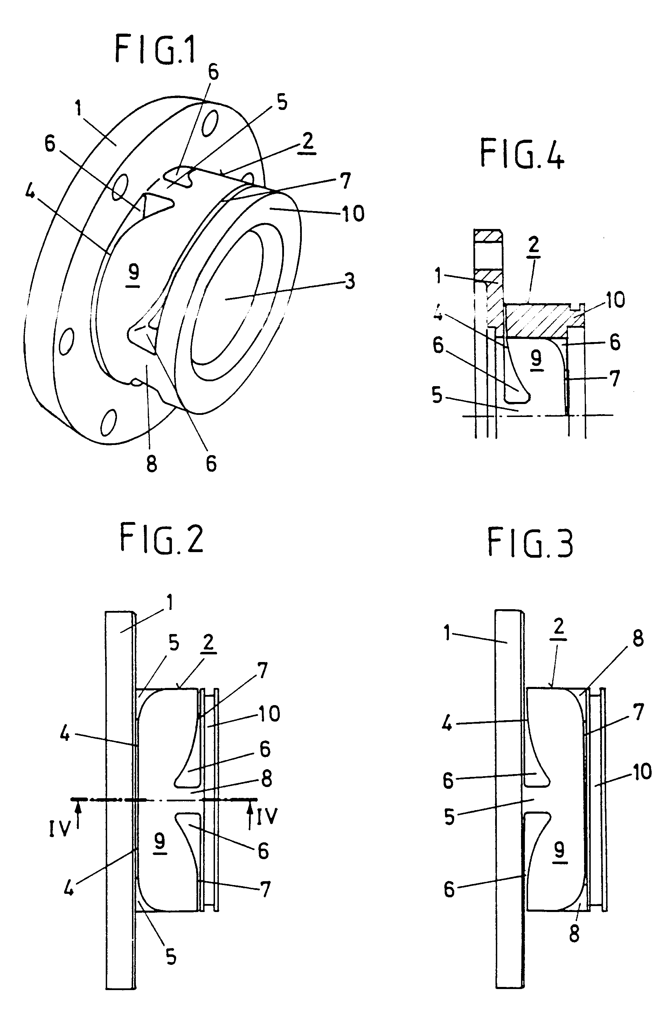

Bei der in Fig. 1 dargestellten ersten Ausführungsform bezeichnet 1 einen Befestigungsflansch, der mit einem Lagergehäuse 2 aus einem Stück besteht. Der Flansch 1 dient zur Befestigung des Lagerhäuses 2 beispielsweise im Inneren eines Wellengehäuses eines Abgasturboladers, und zwar auf der Verdichterseite, gegen welche der Axialschub der Turbine gerichtet ist. Eine Bohrung 3 dient zur Aufnahme einer nicht gezeigten Lagerbüchse, die durch einen Schrumpfsitz in der Bohrung 3 festsitzt und dazu bestimmt ist, ein Gleitlager und an ihrer Stirnseite ein Axiallager bekannter Bauart aufzunehmen.

Die geforderte Nachgiebigkeit der Lagerung unter der Wirkung der Betriebslasten, das ist ein nach allen Richtungen möglicher, definierter Winkelausschlag des Gehäuses 2, erhält man durch Schlitze im Gehäuse 2, die in zwei parallelen Ebenen verlaufen und eine quasikardanische Beweglichkeit des Gehäuses 2 gegenüber dem fest mit dem Wellengehäuse verbundenen Flansch 1 gestatten. Unmittelbar dem Flansch 1 benachbart sind zwei einander radial gegenüberliegende Schlitze 4 vorhanden, deren beide Enden am Umfang des Gehäuses 2 an je einem Steg 5 enden. Die Schlitzenden 6 haben die Form keulenartiger Erweiterungen, wodurch die Stege 5 eine axiale Erstreckung von solcher Länge erhalten, die bei den zu erwartenden Betriebslasten ein Biegen des Gehäuses 2 um eine durch die beiden, einander gegenüberliegenden Stege verlaufende Achse ermöglicht.

Die Stege 5 sind bezüglich Widerstandsmoment und axialer Last auf Dauerfestigkeit dimensioniert.

Zwei gegenüber den Schlitzen 4 um 90° versetzte Schlitze 7 mit den gleichen Abmessungen und deren gleicher Form begrenzen zwei ebenfalls einander diametral gegenüberliegende Stege 8. Die Schlitze 7 trennen das Lagergehäuse 2 in einen mittleren Gehäuseteil 9 und einen äusseren Gehäuseteil 10. Letzterer dient zur Aufnahme einer nicht dargestellten Lagerhülse, welche eine Gleitlagerbüchse und Laufringsegmente bekannter Bauart für das Axiallager aufweist. Diese Lagerhülse ist in die Bohrung 3 eingeschrumpft, wobei sich der Schrumpfsitz nur über den Bereich des äusseren Gehäuseteils 10 erstreckt, mit der Bohrung im mittleren Gehäuseteil 9 jedoch einen Ringraum für die Schmierölzufuhr zu den Lagergleitflächen begrenzt.

Die Stege 5 und 8 bilden Gelenke, welche die volle Schiefstellung des Axiallagers mitmachen, ohne dass dabei die Gehäuseteile 9 und 10 nennenswert deformiert werden.

Die Fig. 2 und 3 zeigen zwei Ansichten einer Ausführung nach Fig.1, gesehen unter zwei um 90° gegeneinander versetzte Projektionsrichtungen. Der äussere Gehäuseteil ist bei dieser Ausführung mit einer Ringnut von rechteckigem Querschnitt zur Aufnahme eines Dichtringes versehen. Die Fig. 4 zeigt in einem Axialschnitt IV-IV, siehe Fig. 2, die obere Hälfte dieser Ausführung.

Bei grösseren und schwereren Rotoren und damit stärker belasteten Lagern, bei denen die Stützung der zwischen den Stegen 5 bzw. 8 liegenden Axiallagersegmente nicht ausreicht, um eine unzulässige Verformung derselben zu verhindern, kann die in den Fig. 5 bis 8 dargestellte Variante verwendet werden. Ihr Aufbau unterscheidet sich von der Variante mit je zwei Stegen 5 bzw. 8 in den beiden Schlitzen 4 und 7 dadurch, dass in ihren Schlitzebenen mit den je vier Schlitzen 11 und 12 je vier Stege 13 bzw. 14 vorhanden sind. Die Fig 7 und 8, welche den in Fig. 5 eingezeichneten Schnittverläufen VII-VII und VIII-VIII entsprechen, zeigen, dass die Stege 13 zwischen den Schlitzen 11 gegenüber den Stegen 14 zwischen den Schlitzen 12 um 45° in Umfangsrichtung gegeneinander versetzt sind. In Fig. 8 ist strichpunktiert der Umriss eines Steges 13 aus Fig. 7 eingetragen, der die Winkelbeziehung zu den Stegen 14 zeigt.

Erklärungsweise wird hier folgendes ausgeführt:
Bei dieser sogenannten "4-Punkt-Variante" erfolgt die Abstützung demnach bei jeder Krafteinleitungsstelle eines 4-Segment-Axiallagers. Der Kraftfluss wird hier also durch 4 Stützen auf einen elastischen Federring 15 geleitet und von diesem wiederum auf die oben bereits gewürdigten vier um 45° versetzte Stützen auf den Befestigungsflansch 1. Diese Lösung benötigt im Vergleich zur Kardanausführung weniger Bauraum und weist im Vergleich zu einer Membranlösung, wie sie vorne unter dem stand der Technik angezogen ist, bei gleicher axialen Nachgiebigkeit ein um ca. einen Faktor 2 besseres Schiefstellungsverhalten auf. Diese 4-Punkt Abstützung arbeitet ebenfalls verschliessfrei und eignet sich vorzüglich, gegen die heutigen Lagerungen austauschbar zu sein. Zu beachten gilt in diesem Zusammenhang, dass der Zwischenring 15 nur auf Biegung beansprucht ist, dies ist insofern möglich, als zwecks minimaler axialer Einfederung eine axiale Bauweise erstellt wird.

## Patentansprüche

1. Axiallagerung mit einer Schiefstellungskompensation
a) mit einem Lagergehäuse (2) zur Aufnahme eines Radialgleitlagers und von Axiallagersegmenten,
b) welches Lagergehäuse (2) einen Befestigungsflansch (1) zur Befestigung des Lagergehäuses (2) in einem Wellengehäuse einer rotierenden Maschine,
c) ein dem Befestigungsflansch (1) benachbartes mittleres Gehäuseteil (9) und
d) ein äusseres Gehäuseteil (10) aufweist,
e) wobei das mittlere Gehäuseteil (9) durch Stege (5, 13; 8, 14) begrenzte Umfangsschlitze (4, 7; 11, 12)
f) in zwei voneinander beabstandeten, zur Lagerachse senkrechten Ebenen aufweist,
g) wobei das mittlere Gehäuseteil (9) über diese Stege (5, 13; 8, 14) einerseits mit dem Befestigungsflansch (1) und andererseits mit dem äußeren Gehäuseteil (10) verbunden ist, sich die Stege (5, 13; 8, 14) jeder Ebene bezüglich der Lagerachse diametral gegenüberliegen und
h) die Enden der Umfangsschlitze (4, 7) in achsparalleler Richtung zu Längsschlitzen erweitert sind,
dadurch gekennzeichnet,
i) dass das Lagergehäuse (2) aus einem einzigen Körper besteht,
j) dass die in den jeweiligen Gehäuseteil (9, 10) mündenden Längsschlitze sich nur über einen Teilbereich der axialen Erstreckung des Gehäuseteils (9, 10) erstrecken und
k) dass die Stege (5, 13) der Umfangsschlitze (4, 11) der einen Ebene gegenüber den Stegen (8, 14) der Umfangsschlitze (7, 12) der anderen Ebene um den halben Winkelabstand (90°, 45°) zweier in der gleichen Ebene befindlicher und einander benachbarter Stege (5, 13) versetzt sind.

2. Axiallagerung nach Anspruch 1, dadurch gekennzeichnet,
a) dass die Umfangsschlitze (4, 11) in einer ersten Ebene direkt an den Befestigungsflansch (1) angrenzen, derart,
b) dass das mittlere Gehäuseteil (9) nur über diese die Umfangsschlitze (4, 11) der ersten Ebene begrenzenden Stege (5, 13) mit dem Befestigungsflansch (1) verbunden ist und
c) dass die Umfangsschlitze (7, 12) in der zweiten Ebene direkt an das äussere Gehäuseteil (10) angrenzen, derart,
d) dass das mittlere Gehäuseteil (9) nur über diese die Umfangsschlitze (7, 12) der zweiten Ebene begrenzenden Stege (8, 14) mit dem äusseren Gehäuseteil (10) verbunden ist.

3. Axiallagerung nach Anspruch 1 oder 2, dadurch gekennzeichnet, dass die Stege (5) der Umfangsschlitze (4) der einen Ebene und die Stege (8) der Umfangsschlitze (7) der anderen Ebene jeweils um 90° in Umfangsrichtung zueinander versetzt sind.

4. Axiallagerung nach Anspruch 1, dadurch gekennzeichnet, dass die Stege (13) der Umfangsschlitze (11) der einen Ebene und die Stege (14) der Umfangsschlitze (12) der anderen Ebene jeweils um 45° in Umfangsrichtung zueinander versetzt sind.

## Claims

1. Axial mounting with skewing compensation
a) having a bearing housing (2) receiving a radial plain bearing and axial bearing segments
b) which bearing housing (2) has a fastening flange (1) for fastening the bearing housing (2) in the shaft housing of a rotating machine,
c) a middle housing part (9) adjacent to the fastening flange (1) and
d) an outer housing part (10),
e) the middle housing part (9) having circumferential slots (4, 7; 11, 12), limited by webs (5, 13; 8, 14),
f) in two planes spaced from one another and perpendicular to the bearing axis,
g) the middle housing part (9) being connected via these webs (5, 13; 8, 14) on the one hand to the fastening flange (1) and on the other hand to the outer housing part (10), the webs (5, 13; 8, 14) of each plane being located diametrically opposite one another in relation to the bearing axis, and
h) the ends of the circumferential slots (4, 7) being widened in an axisparallel direction to form longitudinal slots,
characterised
i) in that the bearing housing (2) consists of a single body,
j) in that the longitudinal slots opening into the respective housing part (9, 10) extend only over a part region of the axial extension of the housing part (9, 10), and
k) in that the webs (5, 13) of the circumferential slots (4, 11) of one plane are offset relative to the webs (8, 14) of the circumferential slots (7, 12) of the other plane by half the angular spacing (90°, 45°) of two webs (5, 13) located in the same plane and adjacent to one another.

2. Axial mounting according to Claim 1, characterised
a) in that the circumferential slots (4, 11) are directly adjacent to the fastening flange (1) in a first plane, in such a way
b) that the middle housing part (9) is connected to the fastening flange (1) only via these webs (5, 13) limiting the circumferential slots (4, 11) of the first plane, and
c) in that the circumferential slots (7, 12) are directly adjacent to the outer housing part (10) in the second plane, in such a way
d) that the middle housing part (9) is connected to the outer housing part (10) only via these webs (8, 14) limiting the circumferential slots (7, 12) of the second plane.

3. Axial mounting according to Claim 1 or 2, characterised in that the webs (5) of the circumferential slots (4) of one plane and the webs (8) of the circumferential slots (7) of the other plane are respectively offset at 90° relative to one another in the circumferential direction.

4. Axial mounting according to Claim 1, characterised in that the webs (13) of the circumferential slots (11) of one plane and the webs (14) of the circumferential slots (12) of the other plane are respectively offset at 45° relative to one another in the circumferential direction.

## Revendications

1. Palier de butée avec une compensation de d'inclinaison :
a) comportant un logement de palier (2) destiné à recevoir un palier lisse et des segments de butée;
b) le logement de palier (2) présentant une bride de fixation (1) pour la fixation du logement de palier (2) dans un carter d'arbre d'une machine rotative;
c) une partie de logement médiane (9) à proximité de la bride de fixation (1), et
d) une partie de logement extérieure (10);
e) la partie de logement médiane (9) présentant des fentes périphériques (4, 7; 11, 12) délimitées par des barrettes (5, 13; 8, 14);
f) dans deux plans écartés l'un de l'autre, perpendiculaires à l'axe du palier;
g) la partie de logement médiane (9) étant reliée d'une part à la bride de fixation (1) et, d'autre part, à la partie de logement extérieure (10) par l'intermédiaire de ces barrettes (5, 13; 8, 14), les barrettes (5, 13; 8, 14) de chaque plan étant diamétralement opposées par rapport à l'axe du palier, et
h) les extrémités des fentes périphériques (4, 7) étant élargies dans une direction parallèle à l'axe en des trous oblongs;
caractérisé en ce que :
i) le logement du palier (2) est composé d'un seul corps;
j) les trous oblongs qui s'ouvrent dans la partie de logement respective (9, 10) ne s'étendent que sur une zone partielle de l'extension axiale de la partie de logement (9, 10), et
k) les barrettes (5, 13) des fentes périphériques (4, 11) d'un plan sont décalées par rapport aux barrettes (8, 14) des fentes périphériques (7, 12) de l'autre plan de la moitié de la distance angulaire (90°, 45°) de deux barrettes (5, 13) situées dans le même plan et voisines l'une de l'autre.

2. Palier de butée suivant la revendication 1, caractérisé en ce que :
a) les fentes périphériques (4, 11) sont directement adjacentes à la bride de fixation (1), dans un premier plan, de telle sorte :
b) que la partie de logement médiane (9) n'est reliée à la bride de fixation (1) que par l'intermédiaire de ces barrettes (5, 13) qui limitent les fentes périphériques (4, 11) du premier plan, et
c) que les fentes périphériques (7, 12) sont directement adjacentes à la partie de logement extérieure (10) dans le second plan, de telle sorte :
d) que la partie du logement médiane (9) n'est reliée à la partie de logement extérieure (10) que par l'intermédiaire de ces barrettes (8, 14) qui limitent les fentes périphériques (7, 12) du second plan.

3. Palier de butée suivant la revendication 1 ou 2, caractérisé en ce que les barrettes (5) des fentes périphériques (4) d'un plan et les barrettes (8) des fentes périphériques (7) de l'autre plan, sont respectivement décalées d'un angle de 90° dans le sens périphérique.

4. Palier de butée suivant la revendication 1, caractérisé en ce que les barrettes (13) des fentes périphériques (11) d'un plan et les barrettes (14) des fentes périphériques (12) de l'autre plan, sont respectivement décalées d'un angle de 45° dans le sens périphérique.
